Europäisches Patentamt

European Patent Office

Office européen des brevets

(11) Publication number: **0 308 244**
**A2**

# EUROPEAN PATENT APPLICATION

(21) Application number: **88308593.8**

(22) Date of filing: **16.09.88**

(51) Int. Cl.4: **G 02 B 6/28**

(30) Priority: **16.09.87 JP 231883/87**

(43) Date of publication of application:
**22.03.89 Bulletin 89/12**

(84) Designated Contracting States: **DE FR GB**

(71) Applicant: **SEIKO INSTRUMENTS INC.**
**31-1, Kameido 6-chome Koto-ku**
**Tokyo 136 (JP)**

**Morishita, Katsumi**
**c/o Osaka Electric & Communication University 18-8**
**Hatsumachi**
**Neyagawa-shi Osaka (JP)**

(72) Inventor: **Morishita, Katsumi**
**c/o Osaka Electric & Communication University**
**18-8 Hatsumachi Neyagawa-shi Osaka (JP)**

**Takesue, Toshiharu**
**c/o Seiko Instruments Inc. 31-1 Kameido 6-chome**
**Koto-ku Tokyo (JP)**

(74) Representative: **Caro, William Egerton et al**
**J. MILLER & CO. Lincoln House 296-302 High Holborn**
**London WC1V 7JH (GB)**

(54) **Optical filter coupler.**

(57) An optical filter coupler for coupling optical signals at a selected wavelength comprises a first optical waveguide (3) and a second optical waveguide (4) closely spaced in parallel with each other for allowing light propagation in one of the waveguides to couple into the other waveguide. The first optical waveguide (3) consists of a first material having a first wavelength-dispersive refractive index and the second optical waveguide (4) consists of a second material having a second wavelength-dispersive refractive index which is different from the first wavelength-dispersive refractive index. The first material and the second material have a common refractive index at the selected frequency.

F I G. 1

**Description**

## OPTICAL FILTER COUPLER

This invention relates to optical filter couplers which use optical fibres or other types of waveguides.

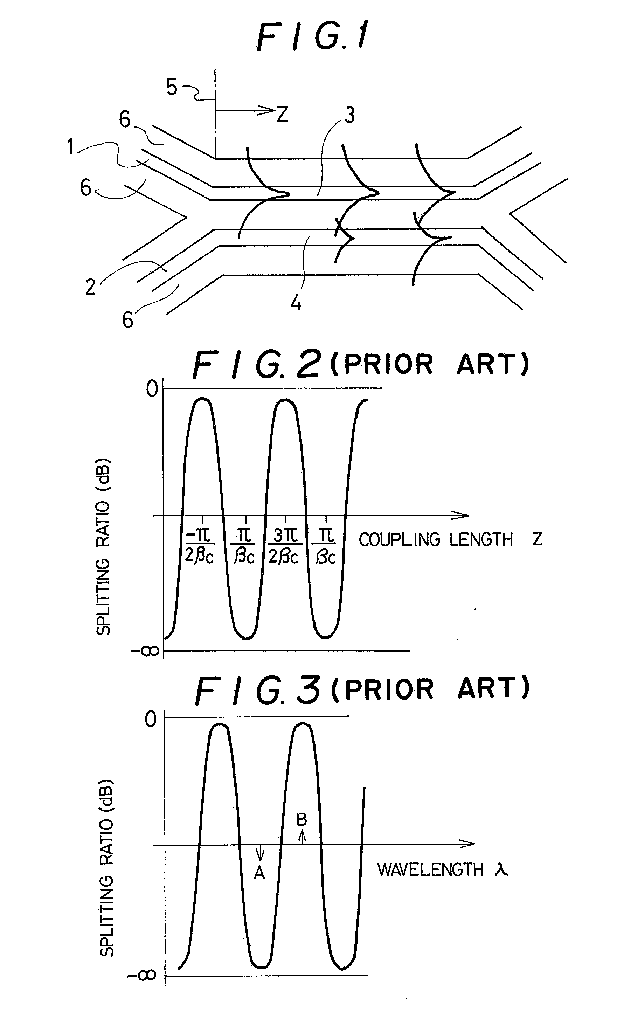

In conventional optical filter couplers, the same material is used for closely spaced optical fibres or waveguides. The splitting ratio of an optical filter coupler is defined by a function of the coupling coefficient, the difference in propagation constant between cores or waveguides of the optical filter coupler, and coupling length. If the coupling coefficient is C, half of the difference in the propagation constant is $\Delta$, and a coupling length from the start of coupling is Z, a splitting ratio R, which represents how much of the light entering an incident port 1 of an optical filter coupler such as shown in Figure 1 couples from a core 3 to a closely spaced core 4, which has an incident port 2, is given by the logarithm of the ratio of light intensities in the cores 3, 4, $\frac{Pb}{Pa}$ as follows:

$$R = 10 \log \frac{P_b}{P_a}$$

$$= 10 \log \frac{C^2 \sin^2 \beta c Z}{\Delta^2 + (C \cos \beta c Z)^2} \quad \ldots \quad (1)$$

$$\text{where } \beta c = \sqrt{C^2 + \Delta^2}$$

Conventionally, closely spaced cores or waveguides are made of the same material, and therefore the difference in propagation constant therebetween should theoretically be zero (0). However, in practice, such difference in propagation constant cannot be reduced to zero. This is because the closely spaced cores or waveguides cannot be manufactured with the same diameter, and consequently a slight difference in the propagation constant between them occurs. Therefore, the maximum splitting ratio in such optical filter couplers is given by:

$$Rmax = 10 \log \frac{C^2}{\Delta^2} \quad \ldots \quad (2)$$

As shown in Figure 2, the splitting ratio is thus governed by a periodic function of the coupling length C, and therefore a major part of the power of the propagating light transfers from one core to the other at a coupling length $Z = \frac{\pi}{2\beta c} \times n$ (n is an integer).

Recently there are demands in the field of multiple wavelength transmission for wavelength filters which perfectly separate a designated wavelength. However, for example, when light of a wavelength A or of a wavelength B shown in Figure 3 are desired to be completely separated, as can be calculated from equation (2) above, the splitting ratio R which can be obtained by a conventional optical filter coupler only reaches finite levels as shown in Figure 3 due to the difference in propagation constant between the waveguides. In other words, a complete power transfer cannot be obtained by use of a conventional optical filter coupler which uses the same material for its waveguide portions. Further, it is extremely difficult to manufacture an optical waveguide coupler having its maximum splitting ratios at two different wavelengths because slight changes in coupling length cause large changes in the splitting ratio.

The present invention seeks to provide an optical filter coupler which is composed of two or more optical fibres such as single-mode optical fibres, multi-mode optical fibres, or other types of waveguides.

According to the present invention, there is provided an optical filter coupler for coupling optical signals at a selected wavelength comprising: a first optical waveguide and a second optical waveguide being closely spaced in parallel with each other for allowing light propagation in one of said first and said second waveguides to couple into the other waveguide, characterised in that said first optical waveguide consists of a first material having a first wavelength-dispersive refractive index and said second optical waveguide consists of a material having a second wavelength-dispersive refractive index which is different from said first wavelength-dispersive refractive index, said first material and said second material having a common refractive index at a selective wavelength.

The use of materials having different wavelength-dispersive refractive indexes for closely spaced waveguides results in a difference in propagation constant. Therefore, the splitting ratio is given by equation (1) above. As described above, the maximum splitting ratio Rmax is given as:

$$Rmax \quad = \quad 10 \ log \ \frac{c^2}{\Delta^2}$$

However, in this case, the material of one of the cores and that of the other have a common refractive index at a selected wavelength, thus there is no difference in propagation constant between the two cores at this wavelength, and $\Delta$ is zero (0).

If a coupling length Z is so selected that the maximum splitting ratio is obtain at this wavelength, since the more a given wavelength shifts from this wavelength, the more $\Delta$ differs from zero (0) and the coupling co-efficient becomes small and the splitting ratio R drastically diminishes. Thus, it is relatively easy to manufacture optical filter couplers which have a peak coupling power at a selected wavelength in a range of a selected bandwidth.

The invention is illustrated, merely by way of example, in the accompanying drawings, in which:-

Figure 1 is a diagrammatic illustration of an optical filter coupler according to the present invention;

Figure 2 shows the relationship between the coupling length and splitting ratio in a conventional optical filter coupler;

Figure 3 shows the relationship between wavelength and splitting ratio in a conventional optical filter coupler;

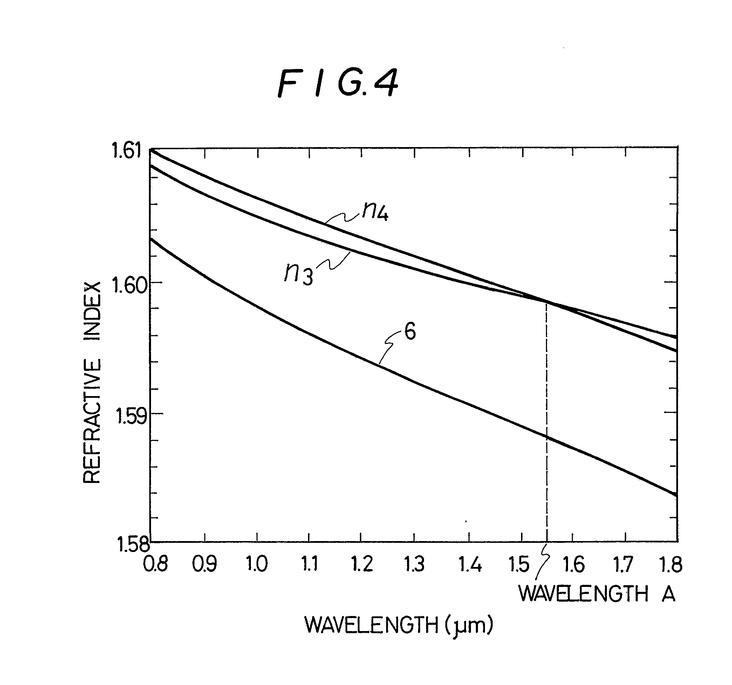

Figure 4 shows the wavelength-dispersion of refractive indexes of materials used for the core and cladding of an optical filter coupler according to the present invention; and

Figure 5 shows the relationship between coupling power and wavelength in an optical filter coupler according to the present invention.

Figure 1 shows diagrammatically an optical filter coupler according to the present invention using single-mode optical fibre, multi-mode optical fibre or other waveguides. Since the basic structure of any optical filter coupler is the same as that of the optical filter coupler using single-mode optical fibres, the description herein is made with reference only to an optical filter coupler using single-mode optical fibres.

A coupling region 5 is formed by either fusing or polishing and jointing parts of two single-mode optical fibres. The cores of these two optical fibres are made of materials having different refractive indexes, $n_3$ and $n_4$. When the light entering an incident port 1 propagates by a distance Z from the region 5 where coupling starts, the splitting ratio there-at is given as:

$$R \quad = \quad 10 \ log \ \frac{c^2 \sin^2 \beta c Z}{\Delta^2 + (C \cos \beta_c Z)^2}$$

where

$\Delta = \frac{\pi}{\lambda}(n_3 - n_4),$

C is the coupling co-efficient,

$\beta c = \sqrt{C^2 + \Delta^2}$ ,

and $\lambda$ is the wavelength of the light in vacuum. Therefore, when conditions are selected to give the maximum value of the above equation, namely when, the coupling length is selected to be an odd multiple of $\frac{\pi}{2\beta_c}$

a splitting ratio of:

$$10 \ log \ \frac{c^2}{\Delta^2}$$

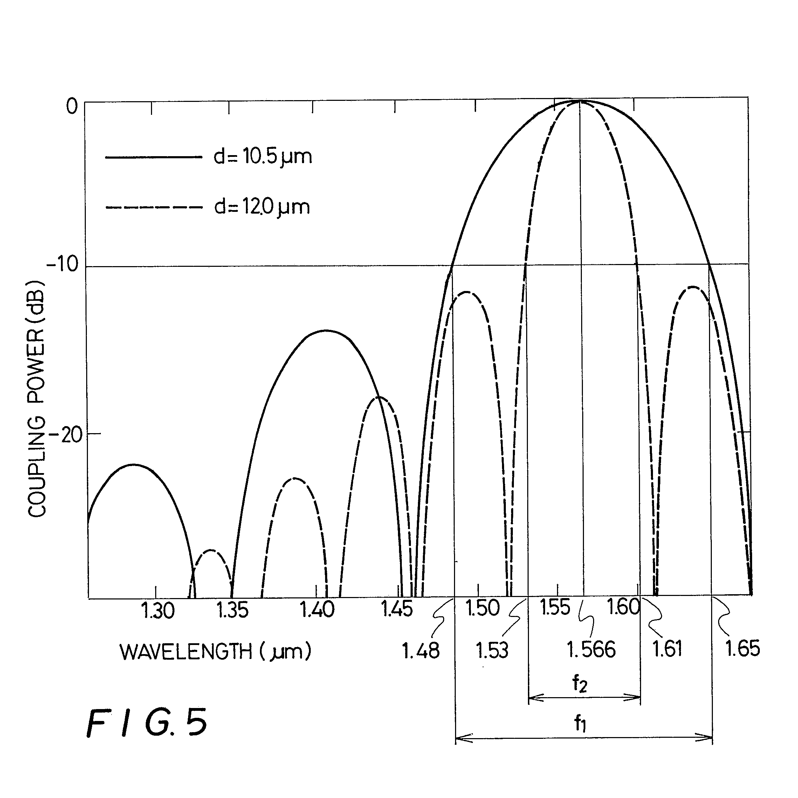

is obtained. If materials having a common refractive index at wavelength A and having different wavelength-dispersive refractive indexes are selected, for example, BaCED1 of HOYA (a Japanese glass manufacturer) is used as a material having the refractive index $n_3$, PCD5 of HOYA (a Japanese glass manufacturer) for a material having the refractive index $n_4$, and ADF10 of HOYA (a Japanese glass manufacturer) for the cladding material 6, $\Delta$ becomes 0 at the wavelength A. However, in this case, the more a given wavelength of the propagating light shifts from the wavelength A, the more $\Delta$ increases. Further, when the coupling length Z is selected to be an odd multiple of

$$\frac{\pi}{2\beta_c}$$

a perfect power transfer from one of the cores 3 to the other core 4 takes place at the wavelength A, while the power transfer drastically diminishes as the wavelength of the propagating light shifts from the wavelength A. The above phenomenon is represented in Figure 5. The solid line therein represents the characteristic obtained when the centre to centre separation between the two cores is 10.5 micron, and the broken line represents the characteristic obtained when the centre to centre separation is 12.0 micron. Assuming a wavelength filter to have the coupling power of 10 dB, when the centre to centre separation is 12.0 micron, this filter will have a peak coupling power at a wavelength of 1.556 micron and a bandwidth of $f_1$ between 1.48 microns and 1.65 micron. When the centre to centre separation is 12.0 micron, this filter will have a peak coupling power at a wavelength of 1.556 micron and a bandwidth of $f_2$ between 1.53 micron and 1.61 micron.

Besides the glass materials used in the above described embodiment of the present invention, other combinations of materials which produce the same characteristics as described above can be selected. Although single-mode optical fibres are used in the above embodiment, multi-mode optical fibres and other types of waveguides, such as planar waveguides, etc. can also be used to produce the same characteristics as described.

Further, the peak coupling power which is defined by wavelength dispersions of refractive indexes of glass materials can also be changed by using structural dispersions of the refractive indexes, for example, by using optical fibres of different diameters in the arrangement shown, for example, in Figure 1. Moreover, functionally different wavelength optical filter couplers can be manufactured by combining three or four optical fibres.

According to the present invention, the selection of wavelengths is easy, both the upper limit and the lower limit of a bandwidth can be adjusted by the centre to centre separation between waveguides, and the selection of wavelengths for peak coupling powers is easy, whereby wavelength filters of uniform quality can be produced at low cost, and the production yield is thus improved.

## Claims

1. An optical filter coupler for coupling optical signals at a selected wavelength comprising: a first optical waveguide (3) and a second optical waveguide (4) being closely spaced in parallel with each other for allowing light propagation in one of said first and said second waveguides to couple into the other waveguide, characterised in that said first optical waveguide (3) consists of a first material having a first wavelength-dispersive refractive index and said second optical waveguide (4) consists of a material having a second wavelength-dispersive refractive index which is different from said first wavelength-dispersive refractive index, said first material and said second material having a common refractive index at a selected wavelength.

2. An optical filter coupler as claimed in claim 1 characterised in said that first and second waveguides (3,4) comprise cores of two single-mode optical fibres.

3. An optical filter coupler as claimed in claim 1 characterised in that said first and second waveguides (3,4) comprise cores of two multi-mode optical fibres.

EP 0 308 269 A1

# F I G . 1

# F I G . 2 (PRIOR ART)

# F I G . 3 (PRIOR ART)

# F I G.4

EP 0 308 269 A1

FIG.5